# DEMANDE DE BREVET EUROPEEN

(11) **EP 2 078 582 A1**
(43) Date de publication de la demande: **15.07.2009**
(21) Numéro de dépôt: 09150129.6
(22) Date de dépôt: 07.01.2009
(51) Int. Cl.: B23K 9/18, B23K 101/06

(54) **Procédé de soudage à l'arc submergé de tubes utilisant plusieurs têtes de soudage**

(30) Priorité: 10.01.2008 FR 0850124
(71) Demandeur: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Bouillot, Claude, 78510 Triel S/ Seine (FR)
(74) Mandataire: Pittis, Olivier

(57) **Abrégé**

Procédé de fabrication d'un tube soudé, dans lequel on soude ensemble les deux bords longitudinaux du tube non soudé par un procédé de soudage à l'arc submergé mettant en oeuvre plusieurs têtes de soudage (1, 2, 3, 4) délivrant des fils (5) de soudage qui sont progressivement fondus par des arcs électriques de manière à créer un joint de soudure entre lesdits bords du tube, **caractérisé en ce que** la première tête de soudage (1) délivre un seul fil de soudage et au moins l'une des autres têtes de soudage (2, 3, 4) délivre 2 fils de soudage (5).

## Description

L'invention concerne un procédé de fabrication de tubes soudés mettant en oeuvre un procédé de soudage à l'arc arc submergé à haute productivité, ainsi qu'une installation de mise en oeuvre dudit procédé.

Les besoins en énergie fossile, notamment gaz et pétrole, impliquent le développement de nouveaux réseaux de pipelines à grande capacité pour approvisionner les utilisateurs.

La construction et la rénovation des pipelines engendrent une forte demande de tubes soudés en acier de diamètres importants et ayant une épaisseur atteignant souvent plusieurs centimètres.

Ces tubes soudés sont fabriqués à partir de tôles mises en forme à l'aide d'une presse hydraulique, puis la fermeture du tube est réalisée par soudage à l'arc submergé.

En effet, le choix du procédé de soudage à l'arc submergé (ci-après soudage « AS ») est motivé par deux raisons majeures, à savoir une productivité élevée et un taux de réparation extrêmement faible.

Dans la pratique, l'assemblage par soudage AS d'un tube en acier est réalisé en deux passes successives sur la longueur du tube, à savoir une première passe à l'intérieur du tube suivie d'une passe à l'extérieur du tube.

Pour satisfaire la demande croissante de tubes, les installations de soudage AS ont été modifiées au fil du temps. Ainsi, les installations de soudage AS mono-fil (encore appelée mono-tête de soudage) ont été progressivement remplacées par des installations multi-fils (encore appelée multi-têtes de soudage) pour augmenter la vitesse de soudage et par conséquent la productivité, comme enseigné par exemple par JP-A-59007481 qui décrit une installation de soudage AS à trois têtes de soudage apportant chacune un fil-électrode fusible.

Le principe des installations multi-fils ou multi-têtes repose sur la fusion simultanée dans un même bain de soudage de plusieurs fils, chaque fil étant délivré par une tête de soudage qui lui est propre. La fusion de chaque fil est contrôlée séparément par un système de dévidage asservi à un générateur de courant. Les générateurs sont connectés pour obtenir le moins possible d'interactions électromagnétiques nuisibles à la stabilité des arcs existant à l'extrémité de chaque fil.

Schématiquement, le système de dévidage de fil se compose principalement d'une buse assurant le guidage et le passage du courant de soudage vers le fil, et d'un moteur électrique asservi au générateur de courant pour assurer le dévidage du fil de soudage. Le diamètre des fils est généralement de l'ordre de 4 mm.

La vitesse de soudage est liée à l'épaisseur du tube à souder et au nombre de fils de soudage d'une installation, comme illustré dans le Tableau suivant qui donne les vitesses « optimales » obtenues en fonction de l'épaisseur soudée et du nombre de fils mis en oeuvre.

**Tableau 1**

| Nombre de fils | Epaisseur minimale (en mm) | Vitesse optimale pour épaisseur mini (en cm/min) | Nombre de fils | Epaisseur maximale (en mm) | Vitesse optimale pour épaisseur maxi (en cm/min) |
|---|---|---|---|---|---|
| 1 | 5 | 150 | 1 | 20 | 50 |
| 3 | 10 | 250 | 3 | 30 | 75 |
| 5 | 15 | 350 | 5 | 40 | 100 |

Comme on le voit, les vitesses de soudage les plus élevées sont atteintes pour des tubes de faible épaisseur et, inversement, en réduisant la vitesse de soudage, on peut augmenter l'épaisseur soudée. En outre, l'augmentation du nombre de fils permet d'augmenter la vitesse de soudage quelle que soit l'épaisseur soudée.

De là, pour accroître la vitesse de soudage, il est usuel d'augmenter le nombre de têtes de soudage. Or, dans la pratique, pour la fabrication de tubes, le nombre de fils est limité à 4 ou 5, selon l'installation de soudage considérée, en raison du manque de place pour ajouter un système de dévidage supplémentaire et à la difficulté de contrôle simultané des paramètres électriques de chaque fil.

On comprend donc qu'actuellement, les procédés et installations de soudage AS existant ne permettent pas d'augmenter la vitesse de soudage des tubes au-delà des valeurs données dans le Tableau précédent puisqu'il n'est pas possible d'augmenter le nombre de têtes de soudage au-delà de 5 du fait d'un encombrement trop important.

Par ailleurs, le document JP-A-02200381 décrit un procédé de soudage AS de tubes mettant en oeuvre une installation comprenant de 3 à 5 têtes de soudage délivrant chacune deux fils de soudage, notamment des fils fourrés.

Toutefois, le procédé de JP-A-02200381 est destiné uniquement au soudage de tubes dont le joint est de forme hélicoïdale. Or, cela implique que sa mise en oeuvre conduit à une pénétration de soudage limitée et insuffisante pour le soudage de tubes avec joints longitudinaux dont l'épaisseur est supérieure à environ 25 mm. De plus, ce procédé est mis en oeuvre du côté interne du tube, ce qui n'est pas pratique au plan industriel pour le soudage AS de tubes avec joints longitudinaux.

Le problème qui se pose est dès lors d'améliorer les procédés et installations de fabrication de tubes avec joints longitudinaux par soudage AS multi-fils de manière à pouvoir augmenter la vitesse de soudage des tubes, préférentiellement d'au moins 20%, sans augmenter le nombre de têtes de soudage par rapport à une installation à têtes mono-fil et tout en conservant une bonne pénétration de soudage par rapport à une installation à têtes multi-fils.

En d'autres termes, la présente invention propose, pour un nombre de têtes de soudage AS donné, par exemple 3 à 5 têtes, et pour une épaisseur de tube à souder donnée, d'augmenter la vitesse de soudage d'un tube à joint longitudinal pouvant être atteinte par rapport à un procédé AS classique et ce, sans que cela ne soit au détriment de la pénétration de soudage.

Une solution de l'invention est alors un procédé de fabrication d'un tube soudé, dans lequel on soude ensemble les deux bords longitudinaux du tube non soudé par un procédé de soudage à l'arc submergé mettant en oeuvre plusieurs têtes de soudage délivrant des fils de soudage qui sont progressivement fondus par des arcs électriques de manière à créer un joint de soudure entre lesdits bords du tube. Selon ce procédé, la première tête de soudage délivre un seul fil de soudage et au moins l'une des autres têtes de soudage délivre 2 fils de soudage.

Dans le cadre de l'invention :
- la première tête de soudage est celle délivrant l'arc qui vient frapper le premier, c'est à dire avant le ou les autres arcs délivrés(s) par la ou les autres têtes de soudage, tout endroit donné du plan de joint formé par l'intersection des bords du tube à souder.
- un tube à joint longitudinal est un tube dont le joint de soudage est sensiblement rectiligne, donc cela exclut les tubes dont les joints sont de forme hélicoïdale

Plus précisément, le procédé de l'invention peut comprendre les étapes successives de:
a) mettre en forme de U puis de O une plaque métallique en rapprochant, l'un de l'autre, les deux bords longitudinaux de ladite plaque de manière à obtenir un tube non soudé avec joint longitudinal,
b) souder le tube non soudé, et
c) on obtenir un tube soudé.

De plus, selon le cas, le procédé de l'invention peut comprendre l'une ou plusieurs des caractéristiques suivantes :
- on met en oeuvre plusieurs têtes de soudage délivrant chacune 2 fils de soudage.
- on met en oeuvre au moins 3 têtes de soudage délivrant au moins 4 fils de soudage.
- on met en oeuvre au moins 3 têtes de soudage délivrant au moins 5 fils de soudage.
- on met en oeuvre de 3 à 5 têtes de soudage délivrant de 4 à 9 fils de soudage.
- les fils de soudage ont un diamètre compris entre 1.2 mm et 6.4 mm, de préférence entre 1.6 mm et 3.2 mm.
- le tube à souder à un diamètre supérieur à plusieurs centimètres, notamment supérieur ou égal à une ou plusieurs dizaines centimètres.
- les fils de soudage sont des fils fourrés ou des fils massifs.
- le tube à souder à une épaisseur supérieure à 5 mm, typiquement entre 5 et 45 mm, de préférence de 8 à 35 mm, de préférence encore de 10 à 30 mm.
- on utilise un flux basique à base de matières minérales, principalement du spath-fluor.
- les bords longitudinaux du tube à souder comprennent une préparation de type chanfrein du côté extérieur du tube.
- le tube est en acier.
- l'intensité du courant alimentant les têtes bi-fils est comprise entre 400 et 2000 A, de préférence entre 700 et 1500 A, notamment avec un fil de diamètre 2.4 mm.
- la tension du courant alimentant les fils est comprise entre 25 et 50 V, de préférence entre 28 et 44 V.
- de préférence, le tube est soudé à pleine pénétration.

La présente invention va maintenant être mieux comprise grâce à aux exemples illustratifs suivants et à la description d'un mode de réalisation de l'invention également donnée ci-après.

Confronté au problème susmentionné et ne pouvant pas ajouter un système de dévidage supplémentaire sur une installation de soudage AS de tubes classique du fait de l'encombrement qu'engendre une telle tête de soudage supplémentaire par rapport au peu de place disponible sur une telle installation, l'inventeur de la présente invention a eu l'idée de regrouper deux fils dans un seul système de dévidage.

Ainsi, comme montré dans les exemples suivants, on a d'abord utilisé une installation à deux têtes de soudage de manière à vérifier que le fait d'apporter deux fils via une seule buse permettait d'accroitre la vitesse de soudage de tube avec joint longitudinal.

La buse d'une des têtes de soudage et les galets d'entraînement de fil sur l'arbre du moteur de dévidage qui lui sont associés ont donc été modifiés pour permettre le guidage de 2 fils de diamètre 2.4 mm à la place d'un seul fil de 4 mm de diamètre, au travers de cette buse. En effet, comme montré ci-après, l'utilisation de 2 fils de 2.4 mm de diamètre permet de conserver une vitesse de dévidage proche d'un seul fil de 4 mm avec des paramètres électriques similaires.

Cette modification a été réalisée ensuite sur un autre des systèmes de dévidage de l'installation, c'est-à-dire que deux têtes de soudage de l'installation ont été adaptées pour délivrer chacune deux fils au lieu d'un seul.

Ensuite, des essais visant à comparer les vitesses de soudage obtenues avec l'installation équipée des 2 systèmes de dévidage, avant et après modification, ont été opérés.

Les essais de soudage AS ont été réalisés avec des tôles destinées à constituer des tubes de 20 mm d'épaisseur en acier au carbone.

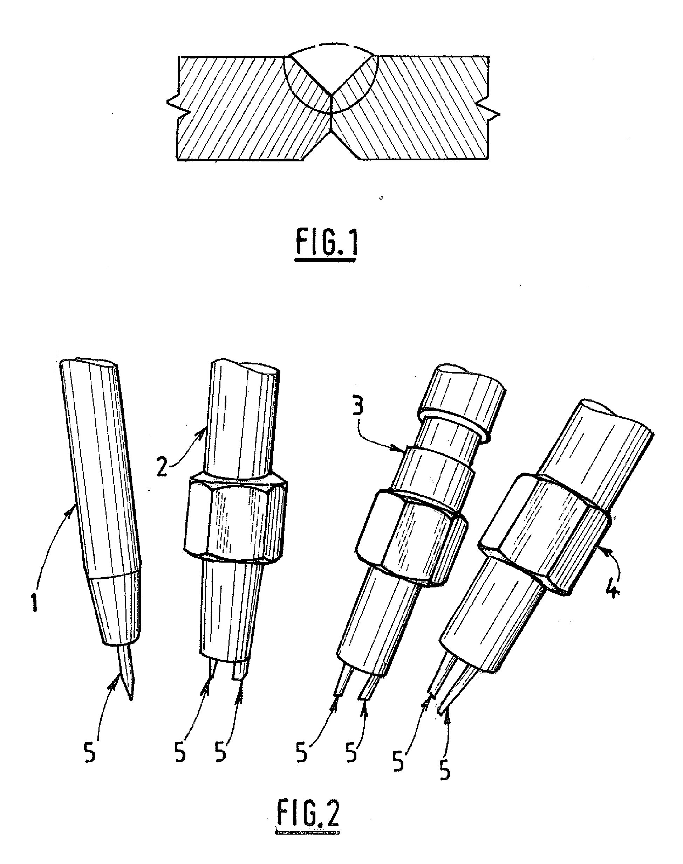

La préparation du joint avec chanfrein est réalisée selon le schéma donné en Figure 1.

Le flux de soudage utilisé est le flux aggloméré référencé OP 132 de la gamme commerciale Oerlikon, commercialisé par la société Air Liquide Welding. Ce flux est couramment utilisé dans la fabrication de gros tubes soudés du fait de ses qualités opératoires et des propriétés mécaniques en zone fondue qu'il permet d'obtenir.

Une première série d'essais (Exemple 1 ci-après) est réalisée avec une installation classique où chaque tête de soudage délivre un seul fil de 4 mm de diamètre, puis une deuxième série d'essais (Exemple 2 ci-après) est réalisée avec une installation modifiée comme expliqué ci-dessus, c'est-à-dire comprenant deux têtes de soudage délivrant chacune 2 fils de 2,4 mm de diamètre.

Les résultats des Exemples 1 et 2 sont donnés ci-après.

### Exemple 1 : Essais avec 2 têtes et 2 fils de 4 mm (selon l'art antérieur)

Dans cet Exemple 1, on a réalisé une série d'essais avec 2 fils de diamètre de 4 mm, soit un fil par tête de soudage, sans modification des systèmes de dévidage de l'installation.

Cette configuration est classique en fabrication de tubes soudés par procédé AS.

On a ajusté le courant de soudage des deux générateurs de courant auxquels sont asservis les moteurs de dévidage afin d'obtenir un remplissage satisfaisant du chanfrein extérieur de la préparation de joint de la Figure 1 (sur la Figure 1, le chanfrein extérieur est celui du dessus).

Les valeurs de courant et de tension appliquées à chaque tête sont données dans le Tableau 2 ci-après, ainsi que les résultats obtenus. Pour obtenir un aspect de soudure satisfaisant, il est aussi nécessaire d'ajuster les tensions de soudage appliquées à chaque fil.

Dans les conditions des essais, il est possible d'atteindre une vitesse maximale de soudage de 100 à 110 cm/min en effectuant un réglage adéquat des tensions de soudage.

Cependant, au delà de cette vitesse de 110 cm/min, il a été impossible, dans cette configuration, d'obtenir un cordon satisfaisant, même en augmentant le niveau de courant. En effet, les soudures présentent alors de nombreux défauts : cordons étroits, caniveaux, irrégularités des bords, mauvais détachement de laitier.

**Tableau 2**

| Essai n° | Courant et tension de la 1^{ère} tête de soudage | Courant et tension de la 2^{e} tête de soudage | Vitesse de soudage maximale obtenue | Résultats obtenus |
|---|---|---|---|---|
| A | 1200 A/34V | 900 A/36V | 110 cm/min | Aspect de cordon correct |
| B | 1300 A/34V | 1000 A/36V | 110 cm/min | Nombreux défaut d'aspect de cordon |

### Exemple 2 : Essais avec 2 têtes et 4 fils de 2.4 mm

Des essais comparatifs ont été réalisés en mettant en oeuvre la même installation de soudage AS de tube que précédemment mais dont deux des têtes de soudage et, bien entendu, les systèmes de dévidage associés ont été modifiés pour permettre le passage de 4 fils de 2.4 mm au lieu de seulement 2 fils comme dans l'Exemple 1. Autrement dit, 2 fils sont délivrés par chacune des têtes de soudage modifiées de manière à pouvoir évaluer le gain en vitesse et la qualité de soudure obtenue.

Les valeurs de courant et de tension appliquées à chaque tête et les résultats obtenus sont donnés dans le Tableau 3 ci-après.

**Tableau 3**

| Essai n° | Courant et tension de la 1^{ère} tête de soudage | Courant et tension de la 2^{e} tête de soudage | Vitesse de soudage | Résultats obtenus |
|---|---|---|---|---|
| C | 1450 A/32V | 1100 A/36V | 170 cm/min | Aspect satisfait Aucun défaut |

Comme on le voit dans le Tableau 2, de façon surprenante, il a été possible d'augmenter le courant sans engendrer de défauts et d'atteindre alors une vitesse de l'ordre de 170 cm/min. Cette vitesse est très supérieure (+ 60% environ) aux valeurs normalement attendues avec 2 têtes de soudage, à savoir de l'ordre de 100 à 110 cm/min.

Ceci démontre que l'ajout d'un fil de soudage dans une ou plusieurs des têtes de soudage d'une installation de soudage AS permet d'augmenter significativement la vitesse de soudage des tubes avec joints longitudinaux fabriqués avec cette installation.

Toutefois, il a été remarqué lors des essais, qu'en alimentant toutes les têtes de soudage avec plusieurs fils, si on gagnait en vitesse de soudage, on perdait parfois en pénétration de soudage, c'est-à-dire que la pénétration devenait insuffisante, en particulier pour les tubes en acier ayant une épaisseur supérieure à 5 mm, par exemple de tubes ayant des épaisseurs allant de 5 à 45 mm.

Pour palier ce problème de pénétration de soudage, l'inventeur de la présente invention s'est rendu compte qu'il était particulièrement avantageux de ne pas alimenter la première tête de soudage avec deux fils mais de l'alimenter avec un fil seulement.

En effet, en procédant ainsi, le courant électrique qui fond le fil unique distribué par la première tête 1 de soudage est concentré en un seul point d'impact sur le tube. L'énergie disponible est donc plus importante et disponible pour fondre plus profondément le métal de base constitutif du tube, ce qui permet d'obtenir une meilleure pénétration qu'avec 2 fils.

De là, pour obtenir à la fois une vitesse élevée de soudage et une bonne pénétration, selon l'invention, on alimente la première tête de soudage avec un seul fil et une ou plusieurs têtes de soudage subséquentes avec plusieurs fils, notamment en fonction de la vitesse de soudage désirée, de l'épaisseur du tube etc... Il s'ensuit que, lorsqu'on utilise 5 têtes de soudage par exemple, le nombre minimum de fils mis en oeuvre sera de 6 mais on limite le nombre maximum de fils à 9.

La présente invention est applicable à toute installation de fabrication de tubes soudés comprenant au moins 2 têtes de soudage AS et typiquement de 2 à 5 têtes de soudage. De cette manière, on peut délivrer simultanément jusqu'à 9 fils de soudage avec une installation à 5 têtes de soudage et donc d'atteindre des vitesses nettement supérieures aux vitesses maximales du Tableau 1 ci-dessus.

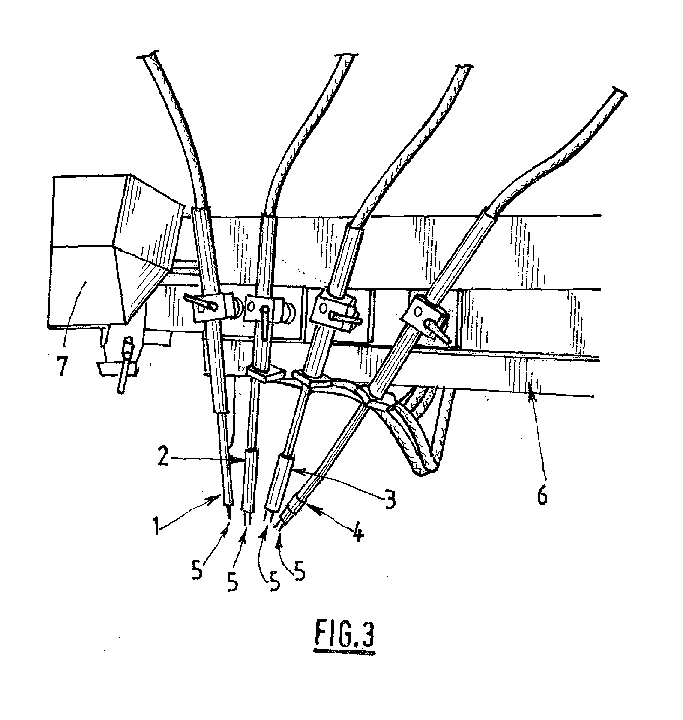

Un exemple de réalisation d'une installation de soudage de tubes à 4 têtes de soudage selon l'invention est schématisé en Figures 2 et 3 ; la Figure 2 étant une vue grossie des têtes de soudage 1 à 4 de la Figure 3.

Ici, l'installation de soudage AS comprend 4 têtes de soudage 1 à 4 portées par une poutre 7 et qui délivrent 7 fils 5 de soudage. Seules les deuxième 2, troisième 3 et quatrième 4 têtes de soudage sont modifiées et délivrent 2 fils 5 chacune, alors que la première tête 1 délivre un fil unique 5.

La première tête de soudage 1 délivre un seul fil pour obtenir une bonne pénétration de soudage, comme expliqué ci-dessus.

Les fils fusibles utilisables selon l'invention peuvent être des fils fourrés ou des fils massifs, en particulier ceux commercialisés par Air Liquide Welding.

L'alimentation en flux de soudage utilisé lors de la mise en oeuvre du procédé de soudage AS, se fait via la trémie 7.

L'invention comprend également des moyens d'entraînement du tube permettant son déplacement par rapport aux têtes de soudage de sorte de pouvoir réaliser un soudage en continu tout le long du plan de joint. Préférentiellement, les têtes de soudage sont fixes et le tube se déplace en étant entraîné par des galets d'entrainement motorisés par exemple ou tout dispositif d'entraînement analogue.

Des moyens de pilotage, telle une CNC ou commande numérique, sont utilisés pour commander l'installation, notamment la synchronisation de l'avancée du tube avec le début du processus de soudage...

La solution de l'invention est applicable aussi bien aux installations existantes qu'aux nouvelles installations, dès lors que des problèmes d'encombrement ne permettent pas l'ajout d'une tête de soudage supplémentaire.

L'invention est particulièrement adaptée au soudage AS de tubes destinés au transport de gaz naturel et de pétrole.

## Revendications

1. Procédé de fabrication d'un tube soudé, dans lequel on soude ensemble les deux bords longitudinaux du tube non soudé par un procédé de soudage à l'arc submergé mettant en oeuvre plusieurs têtes de soudage (1, 2, 3, 4) délivrant des fils (5) de soudage qui sont progressivement fondus par des arcs électriques de manière à créer un joint de soudure entre lesdits bords du tube, **caractérisé en ce que** la première tête de soudage (1) délivre un seul fil de soudage et au moins l'une des autres têtes de soudage (2, 3, 4) délivre 2 fils de soudage (5).

2. Procédé selon la revendication 1, **caractérisé en ce qu'**il comporte les étapes de :
a) mettre en forme de U puis de O une plaque métallique en rapprochant, l'un de l'autre, les deux bords longitudinaux de ladite plaque de manière à obtenir un tube non soudé,
b) souder ensemble les deux bords longitudinaux du tube non soudé,
c) obtenir un tube soudé.

3. Procédé selon l'une des revendications 1 ou 2, **caractérisé en ce qu'**on met en oeuvre plusieurs des têtes de soudage (1, 2, 3, 4) délivrant 2 fils de soudage (5).

4. Procédé selon l'une des revendications 1 à 3, **caractérisé en ce qu'**on met en oeuvre de 3 à 5 têtes de soudage (1, 2, 3, 4) délivrant de 4 à 9 fils de soudage.

5. Procédé selon l'une des revendications 1 à 4, **caractérisé en ce que** les fils de soudage sont des fils fourrés ou des fils massifs.

6. Procédé selon l'une des revendications 1 à 5, **caractérisé en ce que** les fils de soudage ont un diamètre compris entre 1.2 mm et 6.4 mm.

7. Procédé selon l'une des revendications 1 à 6, **caractérisé en ce que l**es fils de soudage ont un diamètre compris entre 1.6 mm et 3.2 mm.

8. Procédé selon l'une des revendications 1 à 7, **caractérisé en ce que** les bords longitudinaux du tube à souder comprennent une préparation de type chanfrein.

9. Procédé selon l'une des revendications 1 à 8, **caractérisé en ce qu'**on utilise un flux basique.

10. Installation de soudage à l'arc submergé comprenant de 2 à 5 têtes de soudage (1, 2, 3, 4) délivrant des fils (5) de soudage, **caractérisée en ce que** la première tête de soudage (1) délivre un seul fil (5) de soudage et au moins l'une des autres têtes de soudage (2, 3, 4) délivre 2 fils (5) de soudage, de préférence plusieurs têtes de soudage (2, 3, 4) délivrent 2 fils (5) de soudage.
